# FASCICULE DE BREVET EUROPEEN

(11) **EP 2 516 251 B1**
(45) Date de publication et mention de la délivrance du brevet: **11.07.2018**
(21) Numéro de dépôt: 10808923.6
(22) Date de dépôt: 22.12.2010
(51) Int. Cl.: B63B 1/10, B63B 35/00, F03D 13/10, F03D 13/40

(54) **SYSTÈME PENDULAIRE DE TRANSPORT EN MILIEU AQUATIQUE D'UN OUVRAGE CIVIL**
PENDELSYSTEM FÜR DEN TRANSPORT EINER HOCH- UND TIEFBAUSTRUKTUR IN EINEM WASSERMEDIUM
PENDULAR SYSTEM FOR TRANSPORTING A CIVIL ENGINEERING STRUCTURE IN AN AQUATIC MEDIUM

(30) Priorité: 24.12.2009 FR 0959607
(43) Date de publication de la demande: 31.10.2012
(73) Titulaire: SOLETANCHE FREYSSINET, 92500 Rueil Malmaison (FR)
(72) Inventeur: LEBON, Jean-Daniel, F-78100 Saint Germain en Laye (FR); MELLIER, Erik, F-78000 Versailles (FR)
(74) Mandataire: Cabinet Plasseraud
(86) Numéro de dépôt international: PCT/FR2010/052886
(87) Numéro de publication internationale: WO 2011/077053

(56) Documents cités:
- EP-A2- 1 101 935
- WO-A1-03/066425
- WO-A1-2007/091042
- WO-A2-2009/153530
- WO-A2-2011/028102
- US-A1- 2008 245 286

## Description

La présente invention concerne le transport en milieu aquatique d'un ouvrage civil.

Pour des raisons de simplicité, il est courant de transporter en mer, non pas un ouvrage civil fini, mais des éléments séparés qui seront ensuite assemblés en pleine mer pour former ledit ouvrage civil.

A titre d'exemple d'ouvrage civil, on peut citer une éolienne. Dans son état final d'assemblage, une éolienne comprend généralement un mât surmonté d'une nacelle coopérant avec un rotor recevant une pluralité de pales.

Pour aboutir à cet état final, des opérations d'assemblage entre les différents éléments constitutifs de l'éolienne sont effectuées.

Ces opérations sont généralement complexes et coûteuses.

C'est le cas en particulier pour ce qui concerne le montage de la nacelle dont le poids est très élevé et des pales.

Ceci s'explique notamment par le fait que les pales sont encombrantes et que leur point de fixation sur l'éolienne est haut.

Ce montage est classiquement réalisé en fixant d'abord tout ou partie des pales sur le rotor et en levant l'ensemble « rotor + pales » jusqu'au sommet du mât positionné verticalement. Les moyens de levage nécessaires à cet effet, par exemple des grues, sont lourds et complexes à utiliser.

La situation est particulièrement délicate dans le cas d'une éolienne offshore, c'est-à-dire destinée à être située en pleine mer.

En effet, il est usuel de transporter séparément les éléments constitutifs d'une telle éolienne puis de les assembler en mer.

L'assemblage de ce type d'éolienne se fait généralement de la façon suivante : on construit le socle, le mât et éventuellement le fût métallique de l'éolienne à terre, on les transporte en mer en les retenant par une grue placée sur une barge, puis, une fois en mer, on pose le rotor et les pales formant l'hélice de l'éolienne sur le mât.

Couramment, le rotor et le mât sont transportés séparément en mer sur un navire de transport. Les trois pales (ou seulement deux des trois pales pour limiter l'encombrement et permettre le stockage sur le navire de transport) sont déjà fixées sur le rotor lors du transport. Puis, une fois en mer, le rotor et les pales sont levés ensembles pour être placés au sommet du mât, à l'aide de grues montées sur des barges ou des plateformes fixes.

Ces travaux maritimes sont relativement longs, complexes et coûteux.

Leur niveau de sécurité est parfois aussi inférieur à celui de travaux réalisés sur terre.

Même si l'on envisageait de transporter en mer un ouvrage civil fini, par exemple en le faisant entièrement reposer sur un bateau ou sur une barge, des travaux maritimes complexes seraient encore nécessaires pour installer l'ouvrage civil dans sa position définitive.

Ainsi, lorsqu'une éolienne est transportée couchée sur une barge, son installation en mer nécessite de la soulever à l'aide d'une grue et de la redresser pour pouvoir la placer verticalement dans sa position définitive. Ces travaux maritimes sont relativement longs, complexes et coûteux à mettre en oeuvre.

La présente invention vise à limiter certains au moins de ces inconvénients.

EP 1 101 935 A2 et WO 2009/153530 A2 décrivent des procédés de transport d'éoliennes offshore, dans lesquels une éolienne est fixée à un dispositif de flottaison remorquée tel qu'une barge, de telle façon que le moyen de fixation est disposé dans une zone de l'ouvrage civil située au dessus du centre d'équilibre dudit ouvrage civil. L'invention propose un procédé de transport en milieu aquatique d'un ouvrage civil comprenant un mât et éventuellement un socle. Ce procédé est tel que défini dans la revendication 1.

Selon l'invention, on entend par « centre d'équilibre » le point d'application de la résultante des forces de gravité et d'Archimède s'appliquant à l'ouvrage civil lors de son transport par le procédé selon l'invention.

Avantageusement, le procédé selon l'invention permet d'assurer une flottaison stable de l'ouvrage civil, rendant son transport particulièrement simple.

Le moyen de fixation utilisé dans le procédé selon l'invention permet d'assurer une grande stabilité de l'ouvrage civil lors de son transport en milieu aquatique, en particulier de compenser les mouvements de tangage et/ou de roulis du dispositif de flottaison lors du transport.

Ce mode de transport permet en outre de simplifier l'installation ultérieure de l'ouvrage civil. Il suffit en effet d'amener l'ouvrage civil jusqu'au-dessus de sa position finale, puis de réduire sa flottaison, ce qui a pour effet de faire descendre l'ouvrage civil dans le milieu aquatique, éventuellement jusqu'à ce que sa base entre en contact avec le fond du milieu aquatique.

Les travaux maritimes complexes nécessaires au transport et/ou à l'installation de l'ouvrage civil peuvent ainsi être limités, voire éliminés.

L'invention concerne également un dispositif de transport en milieu aquatique d'un ouvrage civil comprenant un mât. Ce dispositif est tel que défini dans la revendication 13.

Avantageusement, le moyen de fixation permet de supprimer partiellement ou totalement les accélérations que peut subir l'ouvrage civil.

En particulier dans le cas d'une éolienne, la nacelle, les pales et le mât peuvent subir des accélérations importantes pendant le transport pouvant induire des efforts importants et indésirables. Ainsi, les exigences quant à la minimisation des efforts internes dans la nacelle pendant la phase de transport sont très fortes.

Avantageusement, le moyen de fixation selon l'invention permet de réduire l'accélération et donc les efforts subits par l'éolienne, en particulier par la nacelle, les pales et le mât, pendant le transport.

Certains modes de réalisation du procédé et dudispositif de transport selon l'invention sont définis dans les revendications dépendantes.

L'invention sera mieux comprise à la lecture de la description qui va suivre, donnée uniquement à titre d'exemple et faite en se référant aux dessins annexés dans lesquels:
- la figure 1 est une vue schématique de profil, partiellement en coupe longitudinale dans le sens de la hauteur d'une éolienne et d'un dispositif de flottaison associé, en flottaison stable sur la mer;
- la figure 2 est une vue schématique d'un moyen de fixation selon un premier mode de réalisation de l'invention;
- la figure 3 est une vue schématique d'un moyen de fixation selon un deuxième mode de réalisation de l'invention ; et
- les figures 4 à 7 sont des schémas montrant un exemple non limitatif de transport en mer d'une éolienne dans un état non final d'assemblage.

Pour des raisons de clarté, les différents éléments représentés sur les figures ne sont pas nécessairement à l'échelle.

L'invention vise à assurer le transport d'un ouvrage civil en milieu aquatique, par exemple en mer.

L'ouvrage civil en question peut être tout type d'ouvrage gravitaire. Avantageusement, sa hauteur est supérieure aux dimensions de sa base.

Il peut par exemple s'agir d'une éolienne offshore, c'est-à-dire d'une éolienne destinée à être située en pleine mer.

L'exemple non limitatif d'une éolienne offshore est plus particulièrement considéré par la suite, à titre purement illustratif.

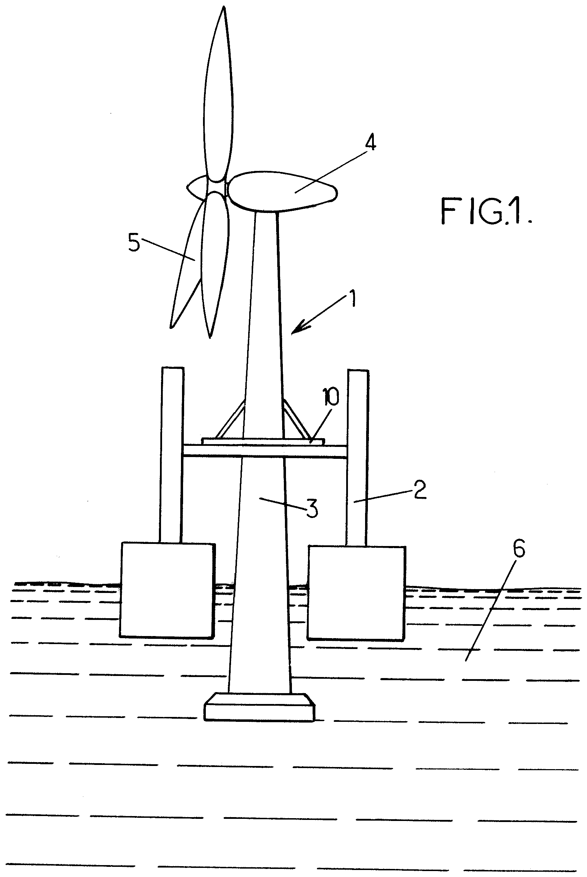

Comme cela apparaît sur la figure 1, on associe un dispositif de flottaison 2 à l'éolienne 1 composée d'une portion inférieure incluant un mât 3, et éventuellement un socle, surmontée d'une nacelle 4 incorporant un rotor portant les pales d'une hélice 5, de façon à assurer une flottaison stable de l'éolienne en mer.

Le dispositif de flottaison 2 et l'éolienne 1 sont associé par un moyen de fixation 10.

Le moyen de fixation 10 est disposé dans une zone de l'éolienne située au dessus du centre d'équilibre de ladite éolienne associée au dispositif de flottaison.

Le « centre d'équilibre » est déterminé comme étant le point d'application de la résultante des forces de gravité et d'Archimède s'appliquant à l'éolienne 1 lorsque cette éolienne 1 est associée au dispositif de flottaison 2 et qu'une portion inférieure déterminée de l'éolienne s'étend dans l'eau en-dessous du dispositif de flottaison 2.

Le « centre d'équilibre » étant confondu avec le centre de gravité de l'éolienne 1 lorsque qu'aucune partie de l'éolienne ne s'étend dans l'eau 6.

En outre, le moyen de fixation 10 est configuré de sorte à découpler les mouvements de rotation du dispositif de flottaison 2 et de l'éolienne 1 autour d'au moins un axe perpendiculaire à l'axe longitudinal du mât 3.

L'axe perpendiculaire à l'axe longitudinal du mât 3 peut correspondre à un axe perpendiculaire à la direction d'avancement du l'éolienne et du dispositif de flottaison 2, permettant ainsi d'éviter la transmission partielle ou totale des mouvements de tangage du dispositif de flottaison à l'éolienne 1.

L'axe perpendiculaire à l'axe longitudinal du mât 3 peut correspondre à un axe parallèle à la direction d'avancement de l'éolienne 1 et du dispositif de flottaison 2, permettant ainsi d'éviter la transmission partielle ou totale des mouvements de roulis du dispositif de flottaison à l'éolienne 1.

Selon un mode de réalisation de l'invention, le moyen de fixation peut être configuré de sorte à découpler partiellement ou totalement les mouvements de rotation du dispositif de flottaison et de l'ouvrage civil autour d'au moins deux axes perpendiculaires à l'axe longitudinal du mât de l'ouvrage civil.

Avantageusement, les deux axes peuvent être perpendiculaires entre eux et permettre d'éviter la transmission des mouvements de tangage et de roulis du dispositif de flottaison 2 à l'éolienne 1.

La stabilité de l'ensemble comprenant l'éolienne 1 et le dispositif de flottaison 2 est ainsi renforcée au cours du transport en milieu aquatique.

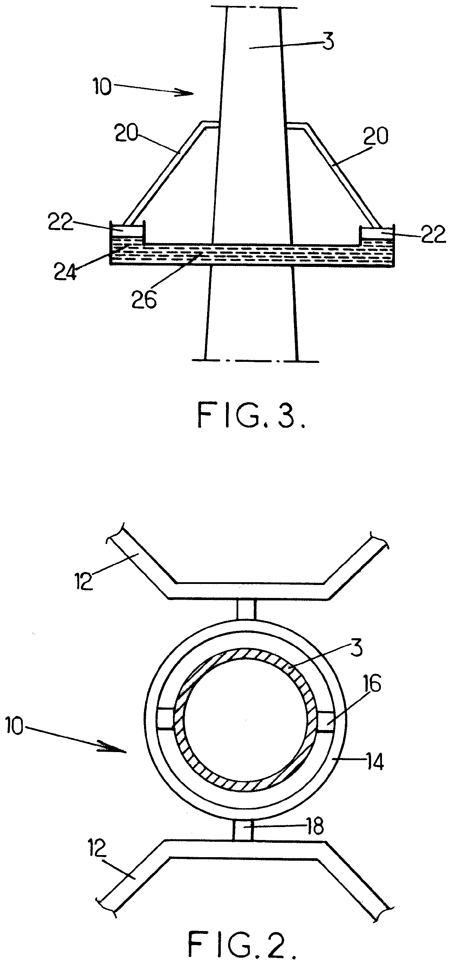

Comme illustré sur la figure 2, le moyen de fixation peut comprendre un dispositif de cardans.

La figure 2 est une coupe selon un plan perpendiculaire à l'axe longitudinal du mât 3 d'une éolienne 1 associé à un dispositif de flottaison (non représenté), le plan passant par le centre d'équilibre de l'éolienne 1.

Les moyens de fixation 10 représentés à la figure 2 comprennent un portique 12 disposé sur le dispositif de flottaison (non représenté) et un anneau 14.

L'anneau 14 est placé dans un plan sensiblement perpendiculaire à l'axe longitudinal du mât 3. L'anneau 14 est associé au mât 3 suivant un premier axe de rotation 16 sensiblement perpendiculaire à l'axe longitudinal du mât 3.

L'anneau 14 est associé au portique 12 suivant un deuxième axe 18 sensiblement perpendiculaire au premier axe 16 et à l'axe longitudinal du mât 3.

Selon un mode de réalisation, le moyen de fixation peut comprendre un deuxième anneau sensiblement concentrique et coplanaire au premier anneau 14. Le deuxième anneau étant d'un part fixé au mât 3 et d'autre part associé au premier anneau suivant le deuxième axe de rotation.

Avantageusement, ce système de cardans permet de découpler les mouvements de tangage et de roulis du dispositif de flottaison 2 de l'éolienne 1 associée. Ainsi les mouvements de tangage et de roulis du dispositif de flottaison 2 ne sont pas transmis à l'éolienne qui reste dans une position sensiblement verticale.

Comme illustré sur la figure 3, le moyen de fixation peut comprendre un système de bain hydraulique.

La figure 3 est une coupe d'un moyen de fixation 10 selon un plan comprenant l'axe longitudinal du mât 3 d'une éolienne 1 associée à un dispositif de flottaison par ledit moyen de fixation 10.

Le moyen de fixation 10 comprend quatre bras de renfort 20 fixés de manière equirépartis autour du mât 3 de l'éolienne. Chacun des bras de renfort 20 repose sur un piston 22, les pistons 22 se déplaçant dans des cylindres 26 communiquant entre eux par une chambre fermée 26 remplie d'un fluide incompressible, par exemple de l'huile.

Ainsi les mouvements de tangage et de roulis du dispositif de flottaison 2 ne sont pas transmis à l'éolienne 1.

Selon un mode de réalisation de l'invention, le moyen de fixation peut comprendre au moins 2, par exemple 3 bras de renfort 20 fixés de manière equirépartis autour du mât 3 de l'éolienne.

Selon un mode de réalisation de l'invention, le débattement angulaire de l'axe longitudinal du mât 3 autour du centre d'équilibre de l'éolienne associée au dispositif de flottaison peut être limité à 10°, de préférence à 5 °.

Ce débattement angulaire de l'axe longitudinal du mât peut être limité et/ou contrôlé par des amortisseurs, par exemple par des vérins passifs ou actifs, fixés au dispositif de flottaison et à l'éolienne. Par exemple, des vérins peuvent être fixés entre le portique 12 et le mât 3 de l'éolienne. De préférence, ces vérins sont fixés au mât 3 au-dessus du moyen de d'équilibre.

Dans le cas de vérins passifs, par exemple hydrauliques, ces deniers amortissent les mouvements relatifs du dispositif de flottaison et de l'éolienne.

Dans le cas de vérins actifs, un système peut mesurer en permanence l'inclinaison de l'axe longitudinal du mât de l'éolienne et ajuster en temps réel les courses des vérins pour aider à maintenir l'éolienne en position verticale, i.e. l'axe longitudinal du mât en position verticale, et ainsi supprimer tout balancement du mât de l'éolienne.

Selon un mode de réalisation de l'invention, une précontrainte dans une direction sensiblement parallèle à l'axe longitudinal du mât 3 peut être appliquée à la partie inférieure de l'éolienne située en-dessous de son centre d'équilibre, par exemple situé en dessous de son centre de gravité.

En effet, le fait de suspendre l'éolienne par un point situé au-dessus de son centre de gravité provoque des contraintes de traction dans la partie inférieure de l'éolienne.

Ces contraintes peuvent avantageusement être compensées par l'ajout de précontraintes verticales dans la partie inférieure de l'éolienne. Par exemple, l'utilisation de câbles de précontrainte peut permettre de rétablir dans la structure inférieure de l'éolienne un état de contrainte voisin de celui existant lorsque l'éolienne est en service.

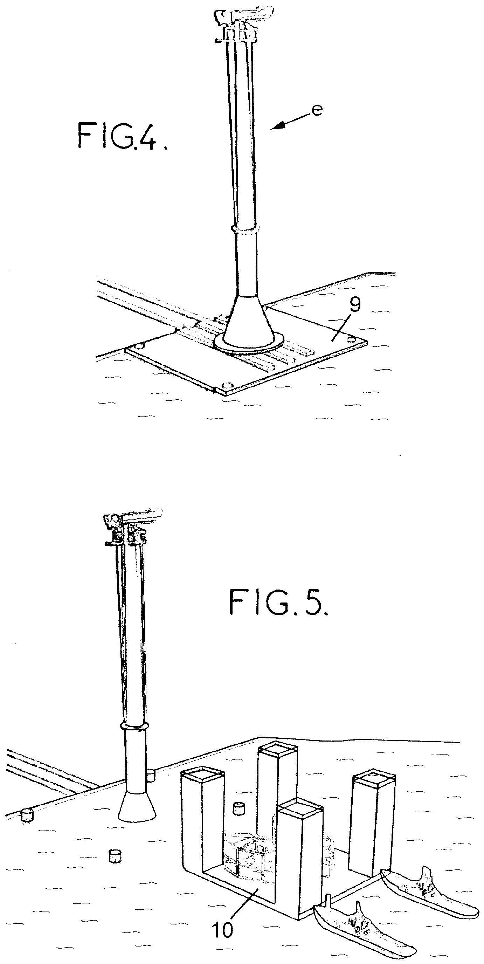

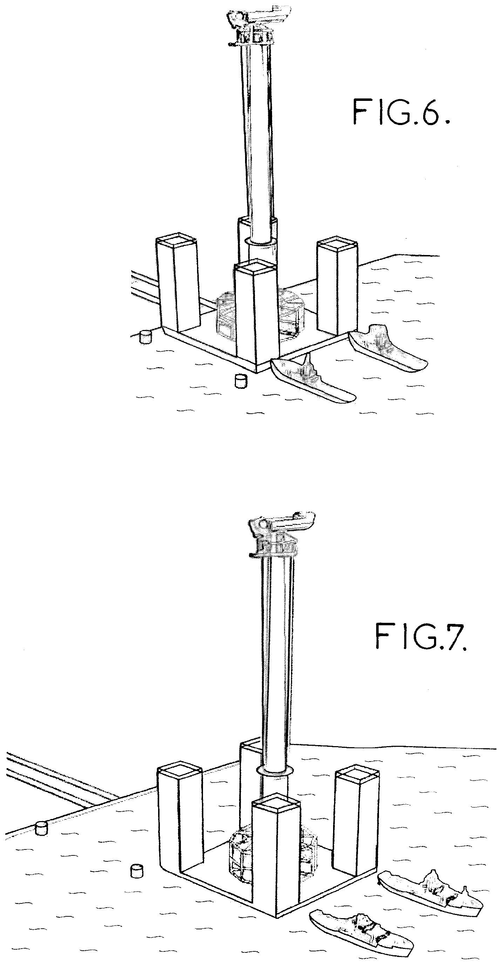

Les figures 4 à 7 illustrent un exemple non limitatif d'un procédé de transport d'une éolienne offshore en associant à l'éolienne au moins un flotteur, de façon à assurer une flottaison stable de l'éolienne dans le milieu aquatique, le flotteur entourant l'éolienne et une portion inférieure de l'éolienne s'étendant au-dessous dudit flotteur, et en faisant progresser l'éolienne et le flotteur associé dans le milieu aquatique jusqu'à position définitive de l'éolienne.

Dans cet exemple, un ouvrage civil e comprenant un mât, des pales assemblées temporairement le long du mât, ainsi qu'une nacelle et un rotor, est tout d'abord transféré sur une barge 9 située en bordure d'un quai (figure 8).

On fait alors descendre la barge 9 dans l'eau, entraînant ainsi l'entrée la partie inférieur du mât dans l'eau. Un dispositif de flottaison 10 est amené pour être fixé par un moyen de fixation à l'ouvrage civil e, de façon à assurer une flottaison stable à l'ouvrage civil e (figures 9 et 10).

A cet effet, le moyen de fixation est disposé dans une zone de l'ouvrage civil e située au-dessus du centre d'équilibre dudit ouvrage civil e associé au dispositif de flottaison, une portion inférieure de l'ouvrage civil e s'étendant dans l'eau en-dessous du flotteur 10.

Afin d'assurer une meilleur stabilité de l'ouvrage civil, le moyen de fixation est configuré de sorte à découpler les mouvements de rotation du dispositif de flottaison et de l'ouvrage civil autour d'au moins un axe perpendiculaire à l'axe longitudinal du mât de l'ouvrage civil.

Par la suite, on fait progresser l'ouvrage civil e et le flotteur associé 10 dans le milieu aquatique, par exemple en les tirant à l'aide de navires, jusqu'à la position définitive de l'ouvrage civil (figure 11).

Comme indiqué ci-après, c'est en cette position définitive de l'ouvrage civil e que les pales peuvent avantageusement être fixées au rotor.

Pour ce faire, seuls des moyens légers sont nécessaires.

En outre, le transport de l'ouvrage civil e avec les pales placées le long du mât réduit considérablement sa prise au vent en comparaison d'une éolienne qui serait transportée dans son état final d'assemblage. La stabilité de l'ensemble est ainsi renforcée au cours de son transport dans l'eau.

Selon des variantes avantageuses de l'invention qui peuvent être combinées entre elles de toutes les façons envisageables :
- l'association temporaire d'au moins certaines pales de ladite pluralité de pales avec le mât comprend la fixation temporaire desdites pales sur une structure de support solidaire du mât, et/ou
- lorsque la nacelle surmonte le mât, on effectue un déplacement relatif de certaines au moins des pales fixées temporairement sur la structure de support et de la nacelle de façon que lesdites pales soient positionnées à proximité du rotor, et/ou
- on déplace lesdites pales sensiblement autour d'un axe longitudinal du mât, et/ou
- on déplace lesdites pales le long d'un chemin ménagé dans la structure de support, et/ou
- on fait tourner la nacelle sensiblement autour d'un axe longitudinal du mât, et/ou
- des logements sont répartis angulairement autour du rotor pour recevoir des pales respectives de ladite pluralité de pales, et on fait tourner le rotor de façon à positionner lesdites pales successivement en regard des logements de rotor respectifs, et/ou
- lorsqu'une pale est sensiblement en regard du logement de rotor respectif, on fixe ladite pale dans ledit logement de rotor respectif, et/ou
- lorsqu'une première pale a été fixée dans le logement de rotor respectif, on fait tourner le rotor de façon à positionner une deuxième pale en regard du logement de rotor respectif, la rotation du rotor entraînant la libération de la première pale de la structure de support, et/ou
- l'association temporaire d'au moins certaines pales de ladite pluralité de pales avec le mât est suivie d'une fixation desdites pales sur le rotor, d'une libération desdites pales de la structure de support solidaire du mât, et d'une désolidarisation de ladite structure de support et du mât, et/ou
- l'association temporaire d'au moins certaines pales de ladite pluralité de pales avec le mât est réalisée en une position temporaire terrestre, et on fixe lesdites pales sur le rotor une fois une position définitive de l'éolienne atteinte.

L'invention ne se limite pas à aux modes de réalisation décrits et doit être interprétée de façon non limitative, et englobant tout mode de réalisation équivalent.

Par la suite, on fait progresser l'ouvrage civil e et le flotteur associé 10 dans le milieu aquatique, par exemple en les tirant à l'aide de navires, jusqu'à la position définitive de l'ouvrage civil (figure 11).

Comme indiqué ci-après, c'est en cette position définitive de l'ouvrage civil e que les pales peuvent avantageusement être fixées au rotor.

Pour ce faire, seuls des moyens légers sont nécessaires.

En outre, le transport de l'ouvrage civil e avec les pales placées le long du mât réduit considérablement sa prise au vent en comparaison d'une éolienne qui serait transportée dans son état final d'assemblage. La stabilité de l'ensemble est ainsi renforcée au cours de son transport dans l'eau.

Selon des variantes avantageuses de l'invention qui peuvent être combinées entre elles de toutes les façons envisageables :
- l'association temporaire d'au moins certaines pales de ladite pluralité de pales avec le mât comprend la fixation temporaire desdites pales sur une structure de support solidaire du mât, et/ou
- lorsque la nacelle surmonte le mât, on effectue un déplacement relatif de certaines au moins des pales fixées temporairement sur la structure de support et de la nacelle de façon que lesdites pales soient positionnées à proximité du rotor, et/ou
- on déplace lesdites pales sensiblement autour d'un axe longitudinal du mât, et/ou
- on déplace lesdites pales le long d'un chemin ménagé dans la structure de support, et/ou
- on fait tourner la nacelle sensiblement autour d'un axe longitudinal du mât, et/ou
- des logements sont répartis angulairement autour du rotor pour recevoir des pales respectives de ladite pluralité de pales, et on fait tourner le rotor de façon à positionner lesdites pales successivement en regard des logements de rotor respectifs, et/ou
- lorsqu'une pale est sensiblement en regard du logement de rotor respectif, on fixe ladite pale dans ledit logement de rotor respectif, et/ou
- lorsqu'une première pale a été fixée dans le logement de rotor respectif, on fait tourner le rotor de façon à positionner une deuxième pale en regard du logement de rotor respectif, la rotation du rotor entraînant la libération de la première pale de la structure de support, et/ou
- l'association temporaire d'au moins certaines pales de ladite pluralité de pales avec le mât est suivie d'une fixation desdites pales sur le rotor, d'une libération desdites pales de la structure de support solidaire du mât, et d'une désolidarisation de ladite structure de support et du mât, et/ou
- l'association temporaire d'au moins certaines pales de ladite pluralité de pales avec le mât est réalisée en une position temporaire terrestre, et on fixe lesdites pales sur le rotor une fois une position définitive de l'éolienne atteinte.

L'invention ne se limite pas à aux modes de réalisation décrits et doit être interprétée de façon non limitative, et englobant tout mode de réalisation équivalent.

## Revendications

1. Procédé de transport en milieu aquatique d'un ouvrage civil (1) comprenant un mât (3), le procédé comprenant les étapes suivantes :
▪ associer l'ouvrage civil (1) à au moins un dispositif de flottaison (2) par un moyen de fixation (10), le moyen de fixation (10) étant disposé dans une zone de l'ouvrage civil (1) située au dessus du centre d'équilibre dudit ouvrage civil (1) associée au dispositif de flottaison, une portion inférieure du mât s'étendant dans l'eau en-dessous du dispositif de flottaison (2),
▪ faire progresser l'ouvrage civil (1) et le dispositif de flottaison (2) associé dans le milieu aquatique jusqu'à une position souhaitée, dans lequel, lors de la progression de l'ouvrage civil (1) et du dispositif de flottaison (2) associé dans le milieu aquatique, les mouvements de rotation du dispositif de flottaison (2) et de l'ouvrage civil (1) autour d'au moins un axe perpendiculaire à l'axe longitudinal du mât (3) de l'ouvrage civil (1) sont découplés.

2. Procédé selon la revendication 1, dans lequel le moyen de fixation (10) est configuré de sorte à découpler les mouvements de rotation du dispositif de flottaison (2) et de l'ouvrage civil (1) autour d'au moins deux axes perpendiculaires à l'axe longitudinal du mât (3) de l'ouvrage civil (1).

3. Procédé selon la revendication 2, dans lequel les aux moins deux axes perpendiculaires sont perpendiculaires entre eux.

4. Procédé selon l'une quelconque des revendications précédentes, dans lequel le moyen de fixation (10) est configuré de sorte que le débattement angulaire de l'axe longitudinal du mât (3) autour du centre de d'équilibre de l'ouvrage civil (1) associé au dispositif de flottaison (2)soit inférieur ou égal à 10°.

5. Procédé selon l'une quelconque des revendications précédentes, dans lequel le moyen de fixation (10) comprend un dispositif de cardans.

6. Procédé selon l'une quelconque des revendications précédentes, dans lequel le moyen de fixation comprend un anneau (14) entourant le mât dans un plan sensiblement perpendiculaire à l'axe longitudinal dudit mât (3), ledit anneau (14) étant associé audit mât suivant un premier axe de rotation (16) sensiblement perpendiculaire à l'axe longitudinal dudit mât (3), ledit anneau étant associé au dispositif de flottaison suivant un deuxième axe de rotation (18) sensiblement perpendiculaire au premier axe de rotation.

7. Procédé selon l'une quelconque des revendications précédentes, dans lequel le moyen de fixation comprend un système de bain hydraulique.

8. Procédé selon l'une quelconque des revendications précédentes, dans lequel le moyen de fixation comprend au moins deux bras de renfort (20) fixés à l'ouvrage civil (1) et reposant chacun sur au moins un piston (22), les pistons se déplaçant dans des cylindres (24) communiquant entre eux par une chambre fermée (26) remplie d'un fluide incompressible.

9. Procédé selon l'une quelconque des revendications précédentes, dans lequel le débattement angulaire de l'ouvrage civil (1) est contrôlé par des amortisseurs fixés au dispositif de flottaison (2) et à l'ouvrage civil (1) au-dessus du moyen de fixation (10).

10. Procédé selon l'une quelconque des revendications précédentes, dans lequel une précontrainte dans une direction sensiblement parallèle à l'axe longitudinal du mât (3) de l'ouvrage civil (1) est appliquée dans la partie de l'ouvrage civil en-dessous du centre d'équilibre de l'ouvrage civil (1) associé au dispositif de flottaison (2) .

11. Procédé selon l'une quelconque des revendications précédentes, dans lequel l'ouvrage civil (1) est une éolienne offshore destinée à comprendre dans son état final un mât (3) supporté par un socle et surmonté d'une nacelle (4) coopérant avec un rotor apte à recevoir une pluralité de pales (5).

12. Procédé selon la revendication 11, comprenant en outre une étape d'association temporaire d'au moins certaines pales (5) de ladite pluralité de pales avec le mât (3), de façon à ce que lesdites pales (5) s'étendent sensiblement dans le sens longitudinal du mât (3).

13. Dispositif de transport en milieu aquatique d'un ouvrage civil (1) comprenant un mât (3), le dispositif de transport comprenant un dispositif de flottaison (2) et un moyen de fixation (10) pour associer l'ouvrage civil (1) au dispositif de flottaison, le moyen de fixation (10) étant apte à être disposé dans une zone de l'ouvrage civil (1) située au-dessus du centre d'équilibre dudit ouvrage civil (1) lorsque l'ouvrage civil est associé au dispositif de flottaison (2) et lorsque une portion inférieure du mât s'étend dans l'eau en-dessous du dispositif de flottaison (2), et en ce que le dispositif de flottaison (2) et le moyen de fixation (10) sont configurés de sorte que lors d'une progression en milieu aquatique de l'ouvrage civil (1) et du dispositif de flottaison (2) associé, la portion inférieure du mât s'étendant dans l'eau en-dessous du dispositif de flottaison (2), les mouvements de rotation du dispositif de flottaison (2) et de l'ouvrage civil (1) autour d'au moins un axe perpendiculaire à l'axe longitudinal du mât (3) de l'ouvrage civil (1) sont découplés, **caractérisé en ce que** le moyen de fixation (10) comprend au moins deux bras de renfort (20) pour être fixés à l'ouvrage civil (1), ces bras de renfort (20) reposant chacun sur au moins un piston (22), les pistons se déplaçant dans des cylindres (24) communiquant entre eux par une chambre fermée (26) remplie d'un fluide incompressible. milieu aquatique de l'ouvrage civil (1) et du dispositif de flottaison (2) associé.

## Patentansprüche

1. Verfahren zum Transportieren einer Baustruktur (1), die einen Mast (3) aufweist, in einem aquatischen Milieu, wobei das Verfahren die folgenden Schritte aufweist:
* Verbinden der Baustruktur (1) mit mindestens einer Schwimmvorrichtung (2) mit Hilfe eines Befestigungsmittels (10), wobei das Befestigungsmittel (10) in einer Zone der Baustruktur (1) angeordnet wird, die sich oberhalb des Gleichgewichtszentrums der mit der Schwimmvorrichtung verbundenen Baustruktur (1) befindet, wobei ein unterer Abschnitt des Masts sich im Wasser unterhalb der Schwimmvorrichtung (2) erstreckt,
* Fortbewegen der Baustruktur (1) und der mit ihr verbundenen Schwimmvorrichtung (2) im aquatischen Milieu zu einer gewünschten Position,
wobei beim Fortbewegen der Baustruktur (1) und der mit ihr verbundenen Schwimmvorrichtung (2) im aquatischen Milieu die Drehbewegung der Schwimmvorrichtung und der Baustruktur (1) um mindestens eine zur Längsachse des Masts (3) der Baustruktur (1) orthogonale Achse entkoppelt sind.

2. Verfahren nach Anspruch 1, in welchem das Befestigungsmittel (10) konfiguriert ist, um die Drehbewegung der Schwimmvorrichtung (2) und die der Baustruktur (1) um mindestens zwei zur Längsachse des Masts (3) der Baustruktur (1) orthogonale Achsen zu entkoppeln.

3. Verfahren nach Anspruch 2, in welchem die mindestens zwei orthogonalen Achsen zueinander orthogonal sind.

4. Verfahren nach einem der vorstehenden Ansprüche, in welchem das Befestigungsmittel (10) konfiguriert ist, so dass der Winkelausschlag der Längsachse des Masts (3) um das Gleichgewichtszentrum der mit der Schwimmvorrichtung (2) verbundenen Baustruktur (1) kleiner oder gleich 10° ist.

5. Verfahren nach einem der vorstehenden Ansprüche, in welchem das Befestigungsmittel (10) eine Kardan-Vorrichtung aufweist.

6. Verfahren nach einem der vorstehenden Ansprüche, in welchem das Befestigungsmittel einen Ring (14) aufweist, der den Mast in einer zur Längsachse des Masts (3) im Wesentlichen orthogonalen Ebene umgibt, wobei der Ring (14) gemäß einer ersten Drehachse (16), die im Wesentlichen orthogonal zur Längsachse des Masts ist, mit dem Mast verbunden wird, wobei der Ring gemäß einer zweiten Drehachse (18), die im Wesentlichen orthogonal zur ersten Drehachse ist, mit der Schwimmvorrichtung verbunden wird.

7. Verfahren nach einem der vorstehenden Ansprüche, in welchem das Befestigungsmittel ein Hydraulikbad-System aufweist.

8. Verfahren nach einem der vorstehenden Ansprüche, in welchem das Befestigungsmittel mindestens zwei Verstärkungsarme (20) aufweist, die an der Baustruktur (1) befestigt werden und jeweils auf mindestens einem Kolben (22) aufliegen, wobei die Kolben sich in Zylindern (24) verschieben, die über eine mit einem inkompressiblen Fluid gefüllte geschlossene Kammer (26) miteinander in Verbindung stehen.

9. Verfahren nach einem der vorstehenden Ansprüche, in welchem der Winkelausschlag der Baustruktur (1) durch Dämpfer gesteuert wird, die an der Schwimmvorrichtung (2) und an der Baustruktur (1) oberhalb des Befestigungsmittels (10) angebracht sind.

10. Verfahren nach einem der vorstehenden Ansprüche, in welchem in dem Teil der Baustruktur, der unterhalb des Gleichgewichtszentrums der mit der Schwimmvorrichtung (2) verbundenen Baustruktur (1) ist, eine Vorspannung in eine Richtung, die im Wesentlichen parallel zur Längsachse des Masts (3) der Baustruktur (1) ist, angelegt wird.

11. Verfahren nach einem der vorstehenden Ansprüche, in welchem die Baustruktur (1) eine Offshore-Windkraftanlage ist, die in ihrem endgültigen Zustand einen von einem Sockel getragenen Mast (3) mit einer oben sitzenden Gondel (4) aufweist, die mit einem Rotor zusammenwirkt, der mehrere Blätter (5) aufnehmen kann.

12. Verfahren nach Anspruch 11, ferner aufweisend einen Schritt eines temporären Verbindens mindestens einiger Blätter (5) der mehreren Blätter mit dem Mast (3), derart, dass sich die Blätter (5) im Wesentlichen in Längsrichtung des Masts (3) erstrecken.

13. Vorrichtung zum Transportieren einer Baustruktur (1), die einen Mast (3) aufweist, in einem aquatischen Milieu, wobei die Transportvorrichtung eine Schwimmvorrichtung (2) und ein Befestigungsmittel (10) zum Verbinden der Baustruktur (1) mit der Schwimmvorrichtung aufweist,
wobei das Befestigungsmittel (10) angepasst ist, um in einer Zone der Baustruktur (1) angeordnet zu werden, die sich oberhalb des Gleichgewichtszentrums der Baustruktur (1) befindet, wenn die Baustruktur mit der Schwimmvorrichtung (2) verbunden ist und wenn ein unterer Abschnitt des Masts sich im Wasser unterhalb der Schwimmvorrichtung (2) erstreckt, und wobei
die Schwimmvorrichtung (2) und das Befestigungsmittel (10) derart konfiguriert sind, dass beim Fortbewegen der Baustruktur (1) und der mit ihr verbundenen Schwimmvorrichtung (2) im aquatischen Milieu der untere Abschnitt des Masts sich im Wasser unterhalb der Schwimmvorrichtung (2) erstreckt,
die Drehbewegung der Schwimmvorrichtung (2) und der Baustruktur (1) um mindestens eine zur Längsachse des Masts (3) der Baustruktur (1) orthogonale Achse entkoppelt sind,
**dadurch gekennzeichnet, dass**
das Befestigungsmittel (10) mindestens zwei Verstärkungsarme (20) aufweist, die an der Baustruktur (1) zu befestigen sind, wobei diese Verstärkungsarme (20) jeweils auf mindestens einem Kolben (22) aufliegen, wobei die Kolben sich in Zylindern (24) verschieben, die über eine mit einem inkompressiblen Fluid gefüllte geschlossene Kammer (26) miteinander in Verbindung stehen.

## Claims

1. Method for transporting in an aquatic medium a civil engineering structure (1) comprising a mast (3), the method comprising:
▪ associating the civil engineering structure (1) with at least one buoyancy unit (2) by a fastening means (10), the fastening means (10) being disposed in a zone of the civil engineering structure (1) located above the equilibrium center of said civil engineering structure (1) associated to the buoyancy device, an inferior portion of the mast extending in the water below the buoyancy device (2)
▪ moving the civil engineering structure (1) and the associated buoyancy unit (2) in the aquatic medium to a desired position,
wherein during the moving of the civil engineering structure (1) and the associated buoyance unit (2) in the aquatic medium, the rotational movements of the buoyancy unit (2) and of the civil engineering structure (1) about at least one axis perpendicular to the longitudinal axis of the mast (3) of the civil engineering structure (1) are decoupled.

2. Method according to claim 1, wherein the fastening means (10) is configured so as to decouple the rotational movements of the buoyancy unit (2) and of the civil engineering structure (1) about at least two axes perpendicular to the longitudinal axis of the mast (3) of the civil engineering structure (1).

3. Method according to claim 2, wherein the at least two axes are perpendicular to each other.

4. Method according to any one of the preceding claims, wherein the fastening means (10) is configured such that the angular displacement of the longitudinal axis of the mast (3) about the center of equilibrium of the civil engineering structure (1) associated with the buoyancy unit (2) is less than or equal to 10°.

5. Method according to any one of the preceding claims, wherein the fastening means (10) comprises a gimbal device.

6. Method according to any one of the preceding claims, wherein the fastening means comprises a ring (14) surrounding the mast in a plane substantially perpendicular to the longitudinal axis of said mast (3), said ring (14) being associated with said mast according to a first axis of rotation (16) substantially perpendicular to the longitudinal axis of said mast (3), said ring being associated with the buoyancy unit according to a second axis of rotation (18) substantially perpendicular to the first axis of rotation.

7. Method according to any one of the preceding claims, wherein the fastening means comprises a hydraulic bath system.

8. Method according to any one of the preceding claims, wherein the fastening means comprises at least two reinforcing arms (20) attached to the civil engineering structure (1) and each sitting on at least one piston (22), said pistons moving within cylinders (24) connected to each other by an enclosed chamber (26) filled with incompressible fluid.

9. Method according to any one of the preceding claims, wherein the angular displacement of the civil engineering structure (1) is controlled by dampers attached to the buoyancy unit (2) and to the civil engineering structure (1) above the fastening means (10).

10. Method according to any one of the preceding claims, wherein prestressing in a direction substantially parallel to the longitudinal axis of the mast (3) of the civil engineering structure (1) is applied in the portion of the civil engineering structure below the center of equilibrium of the civil engineering structure (1) associated with the buoyancy unit (2).

11. Method according to any one of the preceding claims, wherein the civil engineering structure (1) is an offshore wind turbine intended to comprise in its final state a mast (3) supported by a base and topped by a nacelle (4) cooperating with a rotor able to receive a plurality of blades (5).

12. Method according to the preceding claim, further comprising temporarily associating at least some blades (5) of said plurality of blades with the mast (3), so that said blades (5) extend substantially in the longitudinal direction of the mast (3).

13. Device for transporting in an aquatic medium a civil engineering structure (1) comprising a mast (3), said device comprising a buoyancy unit (2) and a fastening means (10) for attaching the civil engineering structure (1) to the buoyancy unit, the fastening means (10) being suitable to be located in a region of the civil engineering structure (1) situated above the center of equilibrium of said civil engineering structure (1) when the civil engineering structure is associated with the buoyancy unit (2) and when an inferior portion of the mast extends in the water below the buoyancy unit(2), and in that the buoyancy unit (2) and the fastening means (10) are configured such that when the civil engineering structure (1) and the associated buoyancy unit (2) move in the aquatic medium, the inferior portion of the mast extending in the water below the buoyancy unit (2), the rotational movements of the buoyancy unit (2) and of the civil engineering structure (1) about at least one axis perpendicular to the longitudinal axis of the mast (3) of the civil engineering structure (1) are decoupled, **characterized in that** the fastening means (10) comprises two reinforcing arms (20) to be fixed to the civil engineering structure (1), said reinforcing arms (20), each sitting on at least one piston (22), the pistons move within cylinders (24) connected to each other by an enclosed chamber (26) filled with an incompressible fluid.
